# EUROPEAN PATENT SPECIFICATION

(11) **EP 2 019 558 B1**
(45) Date of publication and mention of the grant of the patent: **07.11.2012**
(21) Application number: 07846168.8
(22) Date of filing: 27.12.2007
(51) Int. Cl.: H04W 76/02

(54) **METHOD FOR CHECKING QOS PARAMETER AND COMMUNICATION DEVICE IN NETWORKSIDE**
VERFAHREN ZUR ÜBERPRÜFUNG EINES QOS-PARAMETERS UND EINES KOMMUNIKATIONSGERÄTES AUF DER NETZWERKSEITE
PROCÉDÉ POUR VÉRIFIER UN PARAMÈTRE QOS ET DISPOSITIF DE COMMUNICATION CÔTÉ RÉSEAU

(30) Priority: 15.05.2007 CN 200710028016
(43) Date of publication of application: 28.01.2009
(73) Proprietor: Huawei Technologies Co., Ltd., Longgang District, Shenzhen Guangdong 518129 (CN)
(72) Inventor: HAN, Lufeng Huawei Administration Building, Shenzhen Guangdong 518129 (CN)
(74) Representative: Thun, Clemens
(86) International application number: PCT/CN2007/071342
(87) International publication number: WO 2008/138197

(56) References cited:
- WO-A1-2006/117644
- WO-A1-2007/024169
- WO-A2-02/052869
- CN-A- 101 056 448
- US-A1- 2004 176 098
- US-A1- 2005 135 389
- US-A1- 2006 135 172
- RAJEEV KOODLI; MIKKO PUUSKARI: "Supporting Packet-Data QoS in Next-Generation Cellular Networks" IEEE COMMUNICATIONS MAGAZINE, IEEE SERVICE CENTER, PISCATAWAY, US, vol. 39, no. 2, 1 February 2001 (2001-02-01), pages 180-188, XP011091435 ISSN: 0163-6804
- "3rd Generation Partnership Project; Technical Specification Group Services and System Aspects; General Packet Radio Service (GPRS); Service description; Stage 2 (Release 7); EXCERPT, PS. 1-16,134-140, 190-194", 3GPP STANDARD; 3GPP TS 23.060, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE;, no. V7.4.0, 20 March 2007 (2007-03-20), pages 1-216,

## Description

### FIELD OF THE INVENTION

The present invention relates to a communication field, and more particularly to a method for detecting a quality of service (QoS) parameter and a network side communication device.

### BACKGROUND

Along with sharp increase of the number of mobile subscribers and an increasingly high requirement for data services, because a conventional second generation (2G) mobile communication system mainly provides voice services, although it can still provide the data services, lower service rate and limited QoS capability already cannot meet the requirements of future new mobile communication services, such as multimedia and electronic business. Therefore, a third generation (3G) mobile communication system is expected to combine various multimedia communications together, such as radio communication and Internet, so as to process multiple media information, such as image, music and video stream, thereby to provide various services, including webpage browsing, conference call and electronic business. In order to realize the above expectation, a universal mobile telecommunication system (UMTS) has been proposed recently.

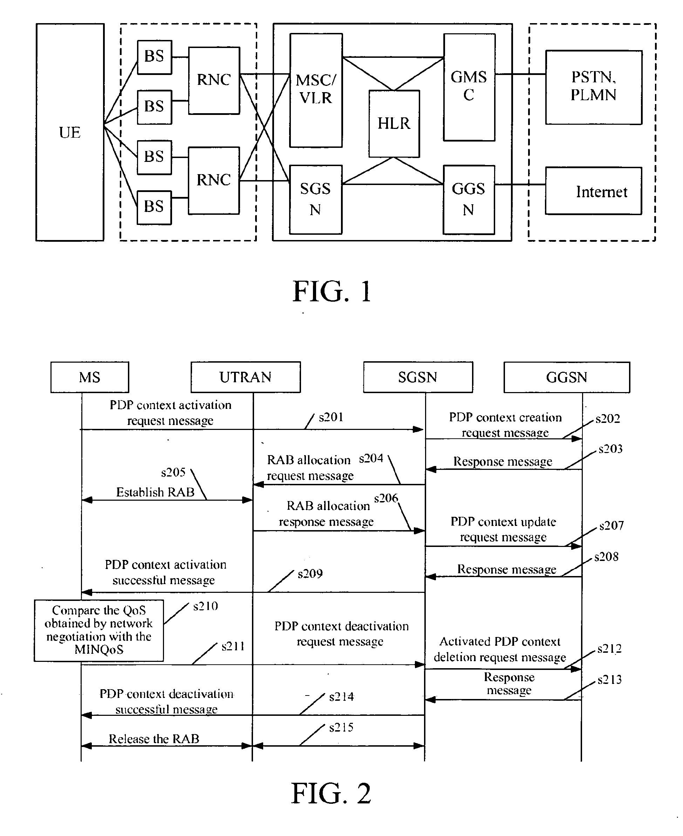

The UMTS cellular communication technique is a new global system for mobile communication (GSM) data communication technique. A UMTS core network technique standard is developed on the basis of a GSM/general packet radio service (GPRS), which inherits the GSM in a better way. The UMTS adopts a structure similar to the GSM system. As shown in Figure 1, the UMTS includes a radio access network (RAN) and a core network (CN). The RAN processes all the functions related to radio access, and the CN processes all the speech calls and data connections within the UMTS system and realizes switching and routing functions with an external network, for example, public land mobile-communication network (PLMN), public switched telecommunication network (PSTN), integrated services digital network (ISDN), Internet etc. The equipment functions included in network units RAN and CN are described as follows:

A user equipment (UE), also called a mobile station (MS), performs data interaction with network equipment through a Uu interface, so as to provide various services in a circuit switched domain and a packet switched domain for the subscribers.

A UMTS terrestrial radio access network (UTRAN) includes a base station (BS) and a radio network controller (RNC), in which the BS is mainly responsible for radio data transmission and participates in radio resource management, and the RNC mainly manages and controls the radio resources within the region responsible by the RNC.

A mobile switching centre/visitor location register (MSC/VLR) is a circuit switched domain function node in the CN, and mainly provides call control, mobility management, authentication, and encryption in the circuit switched domain.

A gateway mobile services switching center (GMSC) is a gateway node between the circuit switched domain and an external network, which is an optional function node and mainly serves as a mobile gateway exchange between a mobile network and a fixed network.

A serving GPRS support node (SGSN) is a packet switched domain function node in the CN and mainly provides routing forward, the mobility management, session management, the authentication and the encryption in the packet switched domain.

A gateway GPRS support node (GGSN) is the packet switched domain function node in the CN and mainly provides an interface function with an external Internet protocol (IP) packet switched network.

A home location register (HLR) is a function node shared by the circuit switched domain and the packet switched domain in the CN, and mainly provides functions of saving subscribed information, supporting new services and enhanced authentication for the subscribers.

In the UMTS system, a general flow for a packet data protocol (PDP) context activation is described as follows. A PDP context activation request message sent by the MS to the network carries the QoS parameter requested by the MS. If the PDP context activation is successfully finished, the network returns a PDP context activation successful message carrying the QoS parameter after network negotiation to the MS. After receiving the PDP context activation successful message, the MS detects whether the QoS parameter after the network negotiation satisfies a minimum acceptable QoS (MINQoS) requirement configured on the MS. If the QoS parameter after the network negotiation does not satisfy the MINQoS requirement configured on the MS, the MS triggers to deactivate the activated PDP context and an execution flow thereof may be shown as Figure 2, which includes the following steps:

Block s201: The MS sends the PDP context activation request message to the SGSN. The PDP context activation request message carries the QoS parameter requested by the MS.

Block s202: The SGSN sends a PDP context creation request message to the GGSN.

Block s203: After establishing the PDP context, the GGSN returns a response message to the SGSN.

Block s204: After determining to establish a radio access bearer (RAB), the SGSN sends a RAB allocation request message to the UTRAN.

Block s205: An information interaction is performed between the UTRAN and the MS to establish the RAB.

Block s206: The UTRAN returns an RAB allocation response message to the SGSN.

Block s207: The SGSN sends a PDP context update request message to the GGSN.

Block s208: The GGSN returns a response message of the PDP context update request message to the SGSN.

Block s209: The SGSN sends the PDP context activation successful message to the MS. The PDP context activation successful message carries the QoS parameter allocated to the MS after the network negotiation.

Block s210: The MS compares the QoS parameter allocated to the MS after the network negotiation carried in the PDP context activation successful message with the MINQoS set on the MS.

Block s211: If it is compared by the MS that the QoS parameter allocated to the MS after the network negotiation does not satisfy the MINQoS requirement, the MS sends a PDP context deactivation request message to the SGSN.

Block s212: The SGSN processes the PDP context deactivation request message and sends an activated PDP context deletion request message to the GGSN.

Block s213: The GGSN sends the PDP context deactivation response message to the SGSN.

Block s214: The SGSN returns a PDP context deactivation successful message to the MS.

Block s215: The established RAB is released.

During the implementation process of the present invention, the inventor found that in the PDP context activation flow of the prior art, the PDP context deactivation step is triggered if the QoS parameter obtained by the network negotiation is determined not to satisfy the MINQoS configured on the MS, so the network and equipment resources continuously occupied by the network side communication device during the PDP context activation flow do not achieve the corresponding expected functions but are released if the PDP context is deactivated so as to result in wastes of the communication resources.
The document "PAJEEV KOODLI; MIKKO PUUSKARI: "Support Packet-Data QoS in Next-Generation Cellular Networks" IEEE COMMUNICATIONS MAGAZINE, IEEE SWRVICE CENTER, PISCATAWAY, US, vol.39, no.2, 1 February 2001 (20010201), pages 180-188, XP011091435 ISSN: 0163" discloses "QOS negotiation and set up" in P.185 and P.186. The method includes: setting up a relation that allows the GGSN to de-multiplex incoming packets destined for an MS to the correct PDP context. The mobile station can be assigned to different applications to different traffic classes depending on their QOS requirements and the mobile station can assume the responsibility for choosing appropriate values depending on a particular QOS supported in the external network. Further is proposed to provide the MS with the option of the requesting both desired and minimum values. The network elements should attempt to provide the desired value first, and then provide a value in the range (minimum, desired) and reject the PDP request if unsuccessful with both attempts.
US patent No. 20060135172, disclosing a method for managing the quality of service that applies to a packet mode mobile communications network, in particular, is characterised in that it includes, in the case of a network overload when accessing the resources of the network in order to execute a service for a network subscriber, a stage that consists in the following, at the level of each of the network nodes: determining an overall priority level for said access to resources, defined by a combination of at least one quality of service parameter related to the type of service and at least one quality of service parameter corresponding to the subscriber priority level, and applying at least one predefined quality of service process to the data stream that corresponds to said service, according to said determined overall priority level.
US patent No. 20050135389 discloses a communication session that can be arranged by means of a node and a gateway. Control parameters are commonly signalled for the communication session from the node to the gateway. In the method, the gateway is provided with information about the capabilities of the node. A decision in made if at least one of the control parameters for the communication session needs to be changed. If so, the new value of the at least one control parameter is determined based on information of the capabilities of the node. The node is then informed about the changed value of the least one control parameter. The communication session can then be controlled based on the changed value of the at least one control parameter.

### SUMMARY

The technical problem to be solved by the embodiments of present invention is to provide a method for detecting a QoS parameter and a network side communication device, as described in the claims.

In order to solve the above technical problem, the embodiment of the present invention provides a method for detecting a QoS parameter, which includes:

A network side communication device acquires a QoS parameter obtained by network negotiation during a PDP context activation process.

The network side communication device compares the QoS parameter obtained by the network negotiation with a minimum acceptable QoS (MINQoS) parameter required by terminal equipment (TE), and rejects a current PDP context activation if the QoS parameter obtained by the network negotiation does not satisfy the MINQoS parameter requirement.

Correspondingly, the embodiment of the present invention further provides a network side communication device, which includes: an acquiring unit adapted to acquire the QoS parameter information obtained by network negotiation during a PDP context activation process; and a processing unit adapted to compare the QoS parameter with the MINQoS parameter required by a TE, and reject a current PDP context activation if the QoS parameter obtained by the network negotiation does not satisfy an MINQoS parameter requirement.

The embodiments of the present invention have the following beneficial effects:

In the embodiments of the present invention, during the PDP context activation process, if the network side communication device determines that the QoS parameter obtained by the network negotiation does not satisfy the MINQoS configured on the MS, the network side communication device rejects to resume the PDP context activation. Therefore, the occupied network and equipment resources are rapidly released during the PDP context activation and deactivation processes, thereby enhancing system work efficiency and network reaction time.

### BRIEF DESCRIPTION OF THE DRAWINGS

Figure 1 is a structural view illustrating an UMTS system in the prior art;

Figure 2 is a flow chart of deactivating a PDP context in the prior art;

Figure 3 is a schematic view illustrating a method for detecting a QoS parameter in accordance with an embodiment of the present invention;

Figure 4 is a schematic view illustrating a method for detecting a QoS parameter in accordance with another embodiment of the present invention;

Figure 5 is a main structural view illustrating a network side communication device in accordance with an embodiment of the present invention; and

Figure 6 is a schematic structural view illustrating an SGSN in accordance with the embodiment of the present invention.

### DETAILED DESCRIPTION

In the embodiments of the present invention, a method for detecting a QoS parameter and a network side communication device are provided, in which if the network side communication device determines that the QoS parameter obtained by network negotiation does not satisfy the MINQoS configured on the MS during the PDP context activation process, the network side communication device rejects to resume the PDP context activation, thereby saving the network and equipment resources.

In practical implementations, the network side communication device acquires the QoS parameter obtained by the network negotiation during a PDP context activation process. Then, the network side communication device compares the QoS parameter obtained by network negotiation with the MINQoS parameter required by the TE, and rejects the current PDP context activation if the QoS parameter obtained by network negotiation does not satisfy the MINQoS parameter requirement.

The embodiments of the present invention are described below in detail with reference to the accompanying drawings.

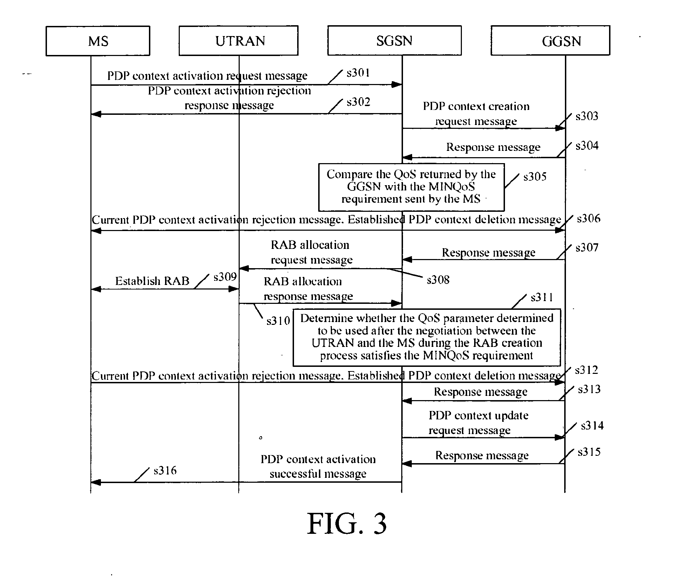

Figure 3 is a schematic view illustrating a method for detecting a QoS parameter in accordance with an embodiment of the present invention. The method is based on the UMTS system shown in Figure 1. Referring to Figure 3, the main flow of the method includes:

Block s301, the MS sends the PDP context activation request message to the SGSN. The PDP context activation request message carries a minimum acceptable QoS parameter required by the MS, i.e. the MINQoS, and carries a requested QoS parameter. Sometimes, the MS also subscribes the QoS parameter in the HLR, and then the SGSN compares the MINQoS with the requested QoS parameter/the subscribed QoS parameter. If it is compared that any one of the requested QoS parameter and the subscribed QoS parameter does not satisfy the MINQoS requirement, Block s302 is executed, if the QoS parameter satisfies the MINQoS requirement, Block s303 is executed.

Particularly, before Block s303 is executed, the method further includes: The SGSN obtains a limited QoS according to the requested QoS and/or the subscribed QoS, the capability of the SGSN and a current load. The SGSN compares the limited QoS with the MINQoS, if it is found that the limited QoS parameter does not satisfy the MINQoS, Block s302 is executed, if the limited QoS parameter satisfies the MINQoS, Block s303 is executed.

Alternatively, in this step, the SGSN directly obtains a limited QoS according to the requested QoS and/or the subscribed QoS, the capability of the SGSN and a current load. The SGSN compares the limited QoS with the MINQoS, if it is found that the limited QoS parameter does not satisfy the MINQoS, Block s302 is executed, if the limited QoS parameter satisfies the MINQoS, Block s303 is executed.

In order to carry the MINQoS in the PDP context activation request message, an information element (IE) Minimum Acceptable QoS may be added in the PDP context activation message. The type of the IE is Tag Length Value (TLV), and the message structure after the addition is shown in Table 1 below:

**Table 1**

| IEI | Information Element | Type/Reference | Presence | Format | Length |
|---|---|---|---|---|---|
| | Protocol discriminator | Protocol discriminator 10.2 | M | V | 1/2 |
| | Transaction identifier | Transaction identifier 10.3.2 | M | V | 1/2-3/2 |
| | Activate PDP context request message identity | Message type 10.4 | M | V | 1 |
| | Requested NSAPI | Network service access point identifier 10.5.6.2 | M | V | 1 |
| | Requested LLC SAPI | LLC service access point identifier 10.5.6.9 | M | V | 1 |
| | Requested QoS | Quality of service 10.5.6.5 | M | LV | 12 |
| | Requested PDP address | Packet data protocol address 10.5.6.4 | M | LV | 3-19 |
| 28 | Access point name | Access point name | O | TLV | 3-102 |
| 27 | Protocol configuration options | Protocol configuration options 10.5.6.3 | O | TLV | 3-253 |
| To be determined | Minimum acceptable QoS | Quality of service 10.5.6.5 | O | TLV | 13 |

In Table 1, except the Minimum acceptable QoS, the other message contents are the same as those defined in Table 9.5.1/3GPP TS 24.008: Activate PDP context request message content in 3GPP TS 24.008 V4.14.0 (2004-06). The descriptions about the added MINQoS is referred to 3GPP TS 24.008 V4.14.0 (2004-06) 10.5.6.5, that is, the content of the MINQoS can be the same as the Requested QoS standard in Table 1, so it is not repeatedly described here.

Block s302: The SGSN sends a PDP context activation rejection response message to the MS, in which the PDP context activation rejection response message may carry rejection reason information "QoS not acceptable", and the flow ends.

Block s303: The SGSN sends the PDP context creation request message to the GGSN.

Block s304: After establishing the PDP context, the GGSN returns a PDP context creation response message to the SGSN, in which the PDP context creation response message carries the QoS parameter information used by the GGSN for the PDP context.

Block s305: After receiving the PDP context creation response message, the SGSN compares the QoS parameter in the PDP context creation response message with the MINQoS sent by the MS. If the QoS parameter returned by the GGSN does not satisfy the MINQoS requirement, Block s306 is executed, if the QoS parameter returned by the GGSN satisfies the MINQoS requirement, Block s308 is executed.

Block s306: The SGSN rejects the current PDP context activation, sends an established PDP context deletion message to the GGSN and sends a PDP context activation rejection message to the MS, in which the PDP context activation rejection message may carry the rejection reason information "QoS not acceptable".

Block s307: After deleting the established PDP context, the GGSN returns a established PDP context deletion response message to the SGSN and the flow ends.

Block s308: If the QoS parameter returned by the GGSN satisfies the MINQoS requirement, and after the SGSN determines to establish the RAB, the SGSN sends an RAB allocation request message to the UTRAN.

Block s309: An information interaction is performed between the UTRAN and the MS to establish the RAB. During this process, the UTRAN and the MS continuously negotiate with each other about the QoS used for establishing the RAB.

Block s310: The UTRAN returns an RAB allocation response message to the SGSN. The RAB allocation response message indicates whether the RAB is successfully established between the UTRAN and the MS.

Block s311: The SGSN determines whether the QoS parameter determined to be used after the negotiation between the UTRAN and the MS during a RAB creation process is acceptable for the MINQoS requirement, if the QoS parameter does not satisfy the MINQoS requirement, Block s312 is executed, if the QoS parameter satisfies the MINQoS requirement, Block s314 is executed.

Block s312: If the SGSN determines that the QoS parameter determined to be used after the negotiation between the UTRAN and the MS during the RAB creation process does not satisfy the MINQoS requirement, the SGSN sends an established PDP context deletion message to the GGSN, and sends a current PDP context activation rejection message to the MS.

Block s313: The GGSN sends an established PDP context deletion response message in Block s312 to the SGSN, and the flow ends.

Block s314: If the SGSN determines that the QoS parameter determined to be used after the negotiation between the UTRAN and the MS during the RAB creation process satisfies the MINQoS requirement, the SGSN updates the QoS parameter to be used by the GGSN according to the QoS determined to be used after the negotiation between the UTRAN and the MS.

Block s315: The GGSN sends a response message about updating the QoS parameter used by the GGSN in Block s314 to the SGSN.

Block s316: After acquiring the updating response message from the GGSN, the SGSN sends the PDP context activation successful message to the MS.

In addition, Block s311 may also be realized in the UTRAN, and accordingly, Block s308 to Block s311 have the following alternative flows:

Block a1: The SGSN sends the RAB allocation request message to the UTRAN, in which the RAB allocation request message carries the MINQoS information sent by the MS.

Block a2: The RAB is created between the UTRAN and the MS, and during this process, the UTRAN and the MS negotiate with each other to determine the used QoS parameter.

Block a3: The UTRAN determines whether the QoS parameter determined to be used after the negotiation in Block a2 satisfies the MINQoS acquired in Block al.

Block a4: If it is determined in Block a3 that the QoS parameter determined to be used after the negotiation between the UTRAN and the MS during the RAB creation process does not satisfy the MINQoS requirement sent by the MS, the UTRAN loops back a notification about triggering the GGSN to delete the established PDP context to the SGSN, and meanwhile, the UTRAN sends the current PDP context activation rejection message to the MS. If it is determined in Block a3 that the QoS parameter determined to be used by the negotiation between the UTRAN and the MS during the RAB creation process satisfies the MINQoS requirement sent by the MS, the UTRAN loops back a notification about triggering to update the QoS parameter used by the GGSN to the SGSN.

In the first embodiment of the method for detecting the QoS parameter, the MINQoS required by the MS, i.e. MINQoS, is reported by the MS, and the network side communication device compares the QoS parameter obtained by network negotiation during the PDP context activation process with the MINQoS to determine whether the network side communication device triggers to reject the current PDP context activation. In the second embodiment of the method for detecting the QoS parameter, the network side communication device acquires the MINQoS in the HLR, and then the network side communication device compares the QoS parameter obtained by network negotiation during the PDP context activation process with the MINQoS, so as to determine whether the network side communication device triggers to reject the current PDP context activation.

In practical applications, merely any one or two steps of Block s301, Block s305 and Block s311 in the embodiment shown in Figure 3 are used to execute the above comparison operations.

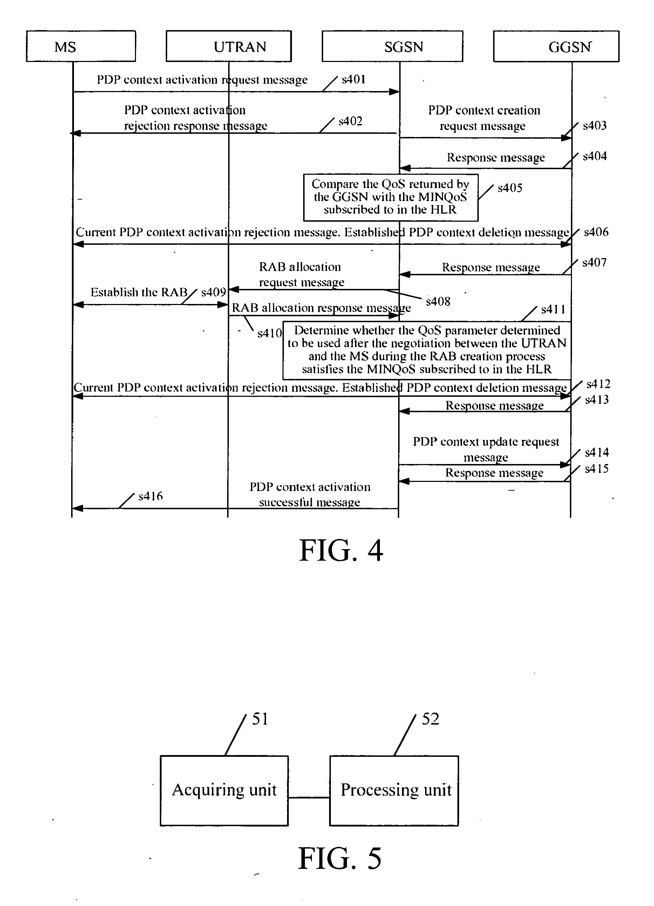

Figure 4 is a schematic view illustrating a method for detecting a QoS parameter in accordance with another embodiment of the present invention. The method is based on the UMTS system shown in Figure 1. Referring to Figure 4, the flow of the method mainly includes the following steps:

Block s401: The MS sends the PDP context activation request message to the SGSN, and the SGSN may acquire the MINQoS stored in the HLR. The PDP context activation request message sent by the MS carries the requested QoS parameter. Sometimes, the MS also subscribes the QoS parameter in the HLR, so the SGSN compares the MINQoS with the requested QoS parameter/the subscribed QoS parameter. If any one of the requested QoS parameter and the subscribed QoS parameter does not satisfy the MINQoS requirement, Block s402 is executed, if one of the requested QoS parameter and the subscribed QoS parameter satisfies the MINQoS requirement, Block s403 is executed.

Particularly, before Block s403, the method further includes: The SGSN obtains the limited QoS according to the requested QoS, and/or the subscribed QoS, the capability of the SGSN and the current load. The SGSN compares the limited QoS with the MINQoS. If the limited QoS parameter does not satisfy the MINQoS, Block S402 is executed, if the limited QoS parameter satisfies the MINQoS, Block s403 is executed.

Alternatively, in this step, the SGSN directly obtains the limited QoS according to the requested QoS and/or the subscribed QoS, the capability of the SGSN and the current load. The SGSN compares the limited QoS with the MINQoS. If the limited QoS parameter does not satisfy the MINQoS, Block S402 is executed, if the limited QoS parameter satisfies the MINQoS, Block s403 is executed.

Block s402: The SGSN sends the PDP context activation rejection response message to the MS, in which the PDP context activation rejection response message may carry the rejection reason information "QoS not acceptable", and the flow ends.

Block s403: The SGSN sends the PDP context creation request message to the GGSN.

Block s404: After establishing the PDP context, the GGSN returns the PDP context creation response message to the SGSN, in which the PDP context creation response message carries the QoS parameter information used by the GGSN for the PDP context.

Block s405: After receiving the PDP context creation response message, the SGSN compares the QoS parameter in the PDP context creation response message with the MINQoS subscribed to in the HLR. If the QoS parameter returned by the GGSN does not satisfy the MINQoS requirement, Block s406 is executed, if the QoS parameter returned by the GGSN satisfies the MINQoS requirement, Block s408 is executed.

Block s406: The SGSN rejects to resume the current PDP context activation, and sends the established PDP context deletion message to the GGSN, and meanwhile sends the current PDP context activation rejection message to the MS, in which the current PDP context activation rejection message may carry the rejection reason information "QoS not acceptable".

Block s407: After deleting the established PDP context, the GGSN returns the established PDP context deletion response message to the SGSN, and the flow ends.

Block s408: If the QoS parameter returned by the GGSN satisfies the MINQoS requirement subscribed to in the HLR, and after the SGSN determines to establish the RAB, the SGSN sends the RAB allocation request message to the UTRAN.

Block s409: The information interaction is performed between the UTRAN and the MS. During this process, the UTRAN and the MS continuously negotiate with each other about the QoS parameter used for establishing the RAB.

Block s410: The UTRAN returns the RAB allocation response message to the SGSN, and the RAB allocation response message indicates whether the RAB is successfully established between the UTRAN and the MS.

Block s411: The SGSN determines whether the QoS parameter determined to be used after the negotiation between the UTRAN and the MS during the RAB creation process satisfies the MINQoS requirement subscribed to in the HLR, and if the QoS parameter does not satisfy the MINQoS requirement, Block s412 is executed, if the QoS parameter satisfies the MINQoS requirement, Block s414 is executed.

Block s412: If the SGSN determines that the QoS parameter determined to be used after the negotiation between the UTRAN and the MS during the RAB creation process does not satisfy the MINQoS requirement subscribed to in the HLR, the SGSN sends the established PDP context deletion message to the GGSN, and sends the current PDP context activation rejection message to the MS.

Block s413: The GGSN sends the established PDP context deletion response message in Block s412 to the SGSN.

Block s414: If the SGSN determines that the QoS parameter determined to be used after the negotiation between the UTRAN and the MS during the RAB creation process satisfies the MINQoS requirement, the SGSN updates the QoS parameter to be used by the GGSN according to the QoS determined to be used through the negotiation between the UTRAN and the MS, and the flow ends.

Block s415: The GGSN sends the response message about updating the QoS parameter used by the GGSN in Block s414 to the SGSN.

Block s416: After acquiring the updating response message from GGSN, the SGSN sends the PDP context activation successful message to the MS.

Similarly, Block s411 may also be realized in the UTRAN, and accordingly, Block s408 to Block s411 have similar alternative flows as illustrated in Figure 3, which are not repeatedly described here.

In practical applications, merely any one or two steps of Block s401, Block s405 and Block s411 in the embodiment shown in Figure 4 are used to execute the above comparison operation.

The network side communication device of the embodiments of the present invention is described below.

Figure 5 is a main structural view illustrating a network side communication device in accordance with the embodiment of the present invention. Referring to Figure 5, the network side communication device mainly includes an acquiring unit 51 and a processing unit 52, and the functions and connection relations between each unit are described as follows:

The acquiring unit 51 is connected to the processing unit 52.

The acquiring unit 51 is adapted to acquire the QoS parameter information obtained by the network negotiation during the PDP context activation process. According to the UMTS system structure of Figure 1, the QoS parameter information obtained by the network negotiation during the PDP context activation process may be obtained from the network equipments of the CN, for example, the SGSN and the GGSN.

The processing unit 52 is adapted to compare the QoS parameter acquired by the acquiring unit 51 with the MINQoS parameter required by the TE. If the QoS parameter obtained by the network negotiation does not satisfy the MINQoS requirement, the processing unit 52 rejects the current PDP context activation. The MINQoS parameter information required by the TE may be sent by the TE to the network side communication device at an initial stage during the PDP context activation process, and may also be the MINQoS parameter information subscribed to by the TE and acquired by the network side communication device from the HLR.

The network side communication device is illustrated below by taking SGSN as an example, and the TE is the MS.

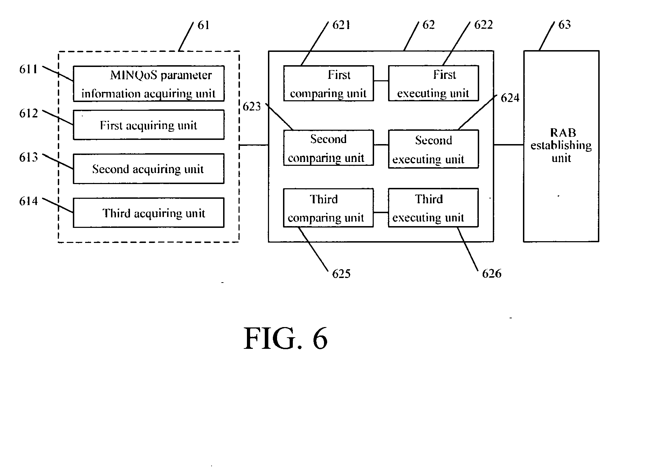

Figure 6 is a schematic structural view illustrating an SGSN in accordance with the embodiment of the present invention. Referring to Figure 6, the SGSN includes an acquiring unit 61, a processing unit 62 and an RAB establishing unit 63. The acquiring unit 61 includes a MINQoS parameter information acquiring unit 611, a first acquiring unit 612, a second acquiring unit 613 and a third acquiring unit 614. The processing unit 62 includes a first comparing unit 621, a first executing unit 622, a second comparing unit 623, a second executing unit 624, a third comparing unit 625 and a third executing unit 626. The functions and connection relations between the units are described as follows:

The acquiring unit 61and the RAB establishing unit 63 are respectively connected to the processing unit 62.

The MINQoS parameter information acquiring unit 611 is adapted to acquire the MINQoS parameter information carried in the PDP context activation request message sent by the MS, or to acquire the MINQoS parameter information of the MS subscribed to in the HLR, i.e. MINQoS. In order to carry the MINQoS in the PDP context activation request message, an IE Minimum Acceptable QoS may be added in the PDP context activation message, and the details are the same as the corresponding descriptions in the first embodiment of the method for detecting the QoS parameter, which are not repeatedly described here.

The first acquiring unit 612 is adapted to acquire the QoS parameter information requested by the TE during the PDP context activation process, i.e. the requested QoS parameter information and/or acquires the QoS parameter information subscribed to by the TE in the HLR, i.e. the subscribed QoS parameter information.

The first comparing unit 621 is adapted to compare the MINQoS acquired by the MINQoS parameter information acquiring unit 611 with the requested QoS parameter/the subscribed QoS parameter acquired by the first acquiring unit 612, i.e. compares whether the requested QoS parameter/the subscribed QoS parameter satisfies the MINQoS requirement.

The first executing unit 622 is adapted to reject the current PDP context activation and send the PDP context activation rejection message to the MS, in which the rejection message includes the rejection reason information "QoS not accepted", if the comparing result of the first comparing unit 621 is that the requested QoS parameter or the subscribed QoS parameter does not satisfy the MINQoS requirement. If the comparing result of the first comparing unit 621 is that the requested QoS parameter/the subscribed QoS parameter satisfies the MINQoS requirement, the first executing unit 622 resumes the current PDP context activation and saves the MINQoS.

The second acquiring unit 613 is adapted to acquire the QoS parameter information returned after the GGSN establishes the PDP context, in which the QoS parameter information is carried in the PDP context creation response message from the GGSN.

The second comparing unit 623 is adapted to compare the saved MINQoS with the QoS parameter information returned from the GGSN and acquired by the second acquiring unit 613, i.e. to compare whether the QoS parameter information returned from the GGSN satisfies the MINQoS requirement.

The second executing unit 624 is adapted to reject the current PDP context activation, and send the PDP context activation rejection message to the MS, in which the rejection message may carry the rejection reason information "QoS not accepted", if the comparing result of the second comparing unit 623 is that the QoS parameter returned from the GGSN does not satisfy the MINQoS requirement, The second executing unit 624 is adapted to send the PDP context deletion notify message to the GGSN.

The RAB establishing unit 63 is adapted to initiate to establish the RAB if the comparing result obtained by the second comparing unit 623 is that the QoS parameter returned after the GGSN establishes the PDP context satisfies the MINQoS requirement.

The third acquiring unit 614 is adapted to acquire the QoS parameter information obtained by the RAN equipment through the negotiation during the RAB establishing process after the RAB establishing unit 63 initiates to establish the RAB.

The third comparing unit 625 is adapted to compare the QoS parameter acquired by the third acquiring unit 614 and obtained by the RAN equipment through the negotiation with the MINQoS, i.e. to compare whether the QoS parameter obtained by the RAN equipment through negotiation satisfies the MINQoS requirement.

The third executing unit 626 is adapted to reject the current PDP context activation and notify the GGSN to delete the established PDP context if the comparing result of the third comparing unit 625 is that the QoS parameter obtained by the RAN equipment through the negotiation does not satisfy the MINQoS requirement, i.e. the RAN equipment does not support the MINQoS requirement. The third executing unit 626 updates the QoS parameter used by the GGSN according to the QoS parameter obtained by the RAN equipment through negotiation if the comparing result of the third comparing unit 625 is that the QoS parameter obtained by the RAN equipment through the negotiation satisfies the MINQoS requirement.

In addition, if the above QoS parameters obtained by the network negotiation, for example, the QoS parameter requested/subscribed to by the MS, the QoS parameter obtained by the GGSN when establishing the PDP context and the QoS obtained by the RAN equipment through the negotiation during the RAB establishing process, are all acceptable for the MINQoS requirement, the SGSN sends the PDP context activation successful message to the MS, and it is determined that the PDP context activation is successfully finished.

Furthermore, the acquiring unit 61 in the network side communication device further includes a fourth acquiring unit. The processing unit 62 further includes a fourth comparing unit and a fourth executing unit (not shown in Figure 6).

The fourth acquiring unit is adapted to acquire the QoS parameter information requested by the TE during the PDP context activation process and/or QoS parameter information subscribed to by the TE in the HLR, and obtains the limited QoS parameter according to the requested QoS parameter and/or the subscribed QoS parameter, capability of the network side communication device and a current load.

The fourth comparing unit is adapted to compare the limited QoS parameter with the MINQoS parameter.

The fourth executing unit rejects to resume the current PDP context activation if the comparing result of the fourth comparing unit is that the limited QoS parameter does not satisfy the MINQoS parameter requirement.

In the network side communication device according to the embodiments of the present invention, for example, the acquiring unit 61 in the SGSN may only include any one or any combination of the first acquiring unit 612, the second acquiring unit 613, the third acquiring unit 614 and the fourth acquiring unit. The processing unit 62 may include any one group or any combination of different groups among the first comparing unit 621 and the first executing unit 622, the second comparing unit 623 and the second executing unit 624, the third comparing unit 625 and the third executing unit 626, and the fourth comparing unit and the fourth executing unit.

During the PDP context activation process, if the SGSN determines that the QoS parameter obtained by the network negotiation does not satisfy the MINQoS configured by the MS, the SGSN triggers to reject the PDP context activation, that is, the rejection of the PDP context activation is realized by the SGSN, so that the occupied network and equipment resources during the PDP context activation are rapidly released in the deactivation process, thereby enhancing the system work efficiency and the network reaction time.

Though illustration and description of the present disclosure have been given with reference to embodiments thereof, it should be appreciated by persons of ordinary skill in the art that various changes in forms and details can be made without deviation from the scope of this disclosure, which are defined by the appended claims.

## Claims

1. A method for detecting a quality of service, QoS, parameter, comprising:
acquiring, by a network side communication device, a packet data protocol, PDP, context activation request message from a mobile station (S301), where in the network side communication device is a serving GPRS support node;
acquiring, by the network side communication device, a minimum acceptable QoS parameter, MINQoS, required by the mobile station from the PDP context activation request message;
acquiring, by the network side communication device, a QoS parameter obtained by network negotiation during a PDP context activation process, wherein acquiring the QoS parameter obtained by network negotiation during a PDP context activation process further comprises: sending, by the network side communication device, a PDP context creation request message to a gateway GPRS support node (S303); and receiving, by the network side communication device, a PDP context creation response message from the gateway GPRS support node (S304) after the gateway GPRS support node establishes a PDP context, wherein the PDP context creation response message carries QoS parameter information used by the gateway GPRS support node for the PDP context; and **characterized by**:
comparing, by the network side communication device, the QoS parameter in the PDP context creation response message with the minimum acceptable QoS parameter required by the mobile station (S305), and rejecting a current PDP context activation if the QoS parameter obtained by the network negotiation does not satisfy the MINQoS parameter requirement.

2. A network side communication device, comprising:
an acquiring unit (61) adapted to acquire quality of service, QoS, parameter information obtained by network negotiation during a packet data protocol, PDP context activation process, wherein the acquiring unit comprises a minimum acceptable QoS, MINQoS, parameter information acquiring unit (611) configured to acquire a MINQoS parameter information required by a mobile station which is carried in a PDP context activation request message sent by the mobile station (S303), or to acquire the MINQoS parameter information of the mobile station subscribed to in the HLR; and a second acquiring unit (613) configured to acquire a QoS parameter information returned after a gateway GPRS support node, GGSN, establishes the PDP context, in which the QoS parameter information is carried in a PDP context creation response message from the GGSN (S304); and **characterized by**:
a processing unit (62) adapted to compare the QoS parameter information returned after the GGSN establishes the PDP context with the minimum acceptable QoS parameter required by the mobile station (623), and reject a current PDP context activation (624) if the QoS parameter returned after the GGSN establishes the PDP context does not satisfy the MINQoS parameter requirement.

## Patentansprüche

1. Verfahren zum Detektieren eines Dienstqualitätsparameters, QoS-Parameters, das Folgendes umfasst:
Erfassen durch eine netzseitige Kommunikationsvorrichtung einer Paketdatenprotokoll-Kontextaktivierungsanforderungsnachricht, PDP-Kontextaktivierungsanforderungsnachricht, von einer Mobilstation (S301), wobei die netzseitige Kommunikationsvorrichtung ein dienender GPRS-Unterstützungsknoten ist;
Erfassen durch die netzseitige Kommunikationsvorrichtung eines minimalen akzeptierbaren QoS-Parameters, MINQoS-Parameters, der von der Mobilstation gefordert wird, aus der PDP-Kontextaktivierungsanforderungsnachricht;
Erfassen durch die netzseitige Kommunikationsvorrichtung eines QoS-Parameters, der durch Netzverhandlung während eines PDP-Kontextaktivierungsprozesses erhalten wird, wobei das Erfassen des QoS-Parameters, der durch Netzverhandlung während eines PDP-Kontextaktivierungsprozesses erhalten wird, ferner Folgendes umfasst: Senden durch die netzseitige Kommunikationsvorrichtung einer PDP-Kontexterzeugungsanforderungsnachricht zu einem Gateway-GPRS-Unterstützungsknoten (S303); und Empfangen durch die netzseitige Kommunikationsvorrichtung einer PDP-Kontexterzeugungsantwortnachricht von dem Gateway-GPRS-Unterstützungsknoten (S304), nachdem der Gateway-GPRS-Unterstützungsknoten einen PDP-Kontext gebildet hat, wobei die PDP-Kontexterzeugungsantwortnachricht QoS-Parameterinformationen führt, die von dem Gateway-GPRS-Unterstützungsknoten für den PDP-Kontext verwendet werden; und
**gekennzeichnet durch**:
Vergleichen **durch** die netzseitige Kommunikationsvorrichtung des QoS-Parameters in der PDP-Kontexterzeugungsantwortnachricht mit dem minimal akzeptierbaren QoS-Parameter, der von der Mobilstation gefordert wird (S305), und Zurückweisen einer momentanen PDP-Kontextaktivierung, falls der **durch** die Netzverhandlung erhaltene QoS-Parameter die MINQoS-Parameteranforderung nicht erfüllt.

2. Netzseitige Kommunikationsvorrichtung, die Folgendes umfasst:
eine Erfassungseinheit (61), die dafür ausgelegt ist, Dienstqualitäts-Parameterinformationen, QoS-Parameterinformationen, zu erfassen, die durch Netzverhandlung während eines Paketdatenprotokoll=Kontextaktivierungsprozesses, PDP-Kontextaktivierungsprozesses, erhalten werden, wobei die Erfassungseinheit eine Einheit (611) zum Erfassen von Informationen bezüglich eines minimalen akzeptierbaren QoS-Parameters, MINQoS-Parameters, umfasst, die konfiguriert ist, MINQoS-Parameterinformationen, die von einer Mobilstation gefordert werden, die in einer von der Mobilstation gesendeten PDP-Kontextaktivierungsanforderungsnachricht geführt wird (S303), zu erfassen oder die MINQoS-Parameterinformationen der Mobilstation, die an dem HLR teilnimmt, zu erfassen; und eine zweite Erfassungseinheit (613), die konfiguriert ist, QoS-Parameterinformationen zu erfassen, die zurückgeleitet werden, nachdem ein Gateway-GPRS-Unterstützungsknoten, GGSN, den PDP-Kontext gebildet hat, wobei die QoS-Parameterinformationen in einer PDP-Kontexterzeugungsantwortnachricht von dem GGSN geführt werden (S304); und **gekennzeichnet durch**:
eine Verarbeitungseinheit (62), die dafür ausgelegt ist, die QoS-Parameterinformationen, die zurückgeleitet werden, nachdem der GGSN den PDP-Kontext gebildet hat, mit dem minimal akzeptierbaren QoS-Parameter, der von der Mobilstation (623) gefordert wird, zu vergleichen und eine momentane PDP-Kontextaktivierung (624) zurückzuweisen, falls der QoS-Parameter, der zurückgeleitet wird, nachdem der GGSN den PDP-Kontext gebildet hat, die MINQoS-Parameteranforderung nicht erfüllt.

## Revendications

1. Procédé de détection d'un paramètre de qualité de service, QoS, comprenant :
l'acquisition, par un dispositif de communication côté réseau, d'un message de requête d'activation de contexte selon le protocole de données par paquets, PDP,
provenant d'une station mobile (S301), le dispositif de communication côté réseau étant un noeud de support de GPRS de service ;
l'acquisition, par le dispositif de communication côté réseau, d'un paramètre de QoS minimum acceptable, MINQoS, requis par la station mobile à partir du message de requête d'activation de contexte PDP ;
l'acquisition, par le dispositif de communication côté réseau, d'un paramètre de QoS obtenu par négociation de réseau durant un processus d'activation de contexte PDP, l'acquisition du paramètre de QoS obtenu par négociation de réseau durant un processus d'activation de contexte PDP comprenant en outre : l'envoi, par le dispositif de communication côté réseau, d'un message de requête de création de contexte PDP à un noeud de support de GPRS passerelle (S303) ; et la réception, par le dispositif de communication côté réseau, d'un message de réponse de création de contexte PDP depuis le noeud de support de GPRS passerelle (S304) après que le noeud de support de GPRS passerelle établit un contexte PDP, le message de réponse de création de contexte PDP incluant des informations de paramètre de QoS utilisées par le noeud de support de GPRS passerelle pour le contexte PDP ; et **caractérisé par** :
la comparaison, par le dispositif de communication côté réseau, du paramètre de QoS dans le message de réponse de création de contexte PDP au paramètre de QoS minimum acceptable requis par la station mobile (S305), et le rejet d'une activation de contexte PDP courante si le paramètre de QoS obtenu par la négociation de réseau ne satisfait pas l'exigence de paramètre MINQoS.

2. Dispositif de communication côté réseau, comprenant :
une unité d'acquisition (61) adaptée pour acquérir des informations de paramètre de qualité de service, QoS, obtenues par négociation de réseau durant un processus d'activation de contexte selon le protocole de données par paquets, PDP, l'unité d'acquisition comprenant une unité d'acquisition d'informations de paramètre de QoS minimum acceptable, MINQoS, (611), configurée pour acquérir des informations de paramètre MINQoS requises par une station mobile qui sont incluses dans un message de requête d'activation de contexte PDP envoyé par la station mobile (S303), ou acquérir les informations de paramètre MINQoS de la station mobile de souscription dans le HLR ; et une seconde unité d'acquisition (613) configurée pour acquérir des informations de paramètre de QoS renvoyées après qu'un noeud de support de GPRS passerelle, GGSN, établit le contexte PDP, les informations de paramètre de QoS étant incluses dans un message de réponse de création de contexte PDP provenant du GGSN (S304), et **caractérisé par** :
une unité de traitement (62) adaptée pour comparer les informations de paramètre de QoS renvoyées après que le GGSN établit le contexte PDP au paramètre de QoS minimum acceptable requis par la station mobile (623), et rejeter une activation de contexte PDP courante (624) si le paramètre de QoS renvoyé après que le GGSN établit le contexte PDP ne satisfait pas l'exigence de paramètre MINQoS.
